# EUROPÄISCHE PATENTSCHRIFT

(11) **EP 2 805 852 B1**
(45) Veröffentlichungstag und Bekanntmachung des Hinweises auf die Patenterteilung: **08.05.2019**
(21) Anmeldenummer: 14169072.7
(22) Anmeldetag: 20.05.2014
(51) Int. Cl.: B60P 1/02, B60P 1/64

(54) **Anhänger für einen Routenzug**
Trailer for a route train
Remorque de chariot tracteur

(30) Priorität: 22.05.2013 DE 102013008672
(43) Veröffentlichungstag der Anmeldung: 26.11.2014
(73) Patentinhaber: Jungheinrich Aktiengesellschaft, 22047 Hamburg (DE)
(72) Erfinder: Ziemann, Jörg, 21149 Hamburg (DE); Kraase, Arne, 21337 Lüneburg (DE)
(74) Vertreter: Hauck Patentanwaltspartnerschaft mbB

(56) Entgegenhaltungen:
- WO-A2-2009/036750
- DE-A1-102004 018 910
- DE-A1-102011 017 346
- DE-U1-202011 106 210

## Beschreibung

Die vorliegende Erfindung betrifft einen Anhänger für einen Routenzug mit einem vorderen und einem hinteren Anhängerabschnitt. Die Anhängerabschnitte sind über einen portalartigen Bogen unter Bildung eines Aufnahmebereichs für mindestens einen Innenwagen miteinander verbunden. Anhänger dieser Bauart werden gelegentlich auch als Portalwagen bezeichnet.

Ein Vorteil bei einem Anhänger mit einem Aufnahmebereich, der von einem portalartigen Bogen überspannt ist, liegt darin, dass ein zu transportierender Innenwagen von beiden Seiten quer zur Längsrichtung des Anhängers in den Aufnahmebereich eingeschoben werden kann. In dem Aufnahmebereich wird der Innenwagen dann über eine Hubeinrichtung für den Transport angehoben.

Aus DE 20 2008 013 575 U1 ist ein Transportsystem mit einem Portalwagen bekannt geworden, der einzuschiebende Innenwagen besitzt und an seiner Seite Kulissen, die mit einem federvorgespannten Riegel an dem Portalanhänger zusammenwirken. Der vollständig in den Aufnahmebereich eingeschobene Innenwagen wird dann durch Eintritt des Riegels in die Kulisse in dem Aufnahmebereich gesichert.

Als nachteilig erweist sich diese Einrichtung beim Nachrüsten, da sowohl der Anhänger als auch der Innenwagen aufeinander abgestimmt nachgerüstet werden müssen.

Aus WO 98/58849 sind mit Rädern ausgestattete Paletten bekannt geworden, die zu einem Transportzug zusammengefasst werden können. Hierbei ist vorgesehen, dass die den Innenwagen des Transportzuges bildenden Paletten durch ein Umklappen der Räder den Bodenkontakt verlieren und so in die Transportposition gelangen können.

Aus DE 20 2011 106 210 U1 ist eine Transporteinheit zum Transport zumindest einer Lafette mit einem fahrbaren Rahmengestell bekannt. Für die Lafette ist im Aufnahmebereich eine Verriegelungseinrichtung vorgesehen, die in Ruhestellung hinter eine Verkleidung verschwenkt ist und in der Betriebsstellung motorisch in eine Verriegelungsposition verschwenkt wird.

Der Erfindung liegt die Aufgabe zugrunde, einen Anhänger für einen Routenzug zu schaffen, der bei einem Einschieben des Innenwagens in den Anhänger eine Mittelposition des Innenwagens in dem Anhänger sichert und nach Möglichkeit mit geringem Aufwand bei bereits im Markt befindlichen Anhängern und ihren Innenwagen nachgerüstet werden kann.

Erfindungsgemäß wird die Aufgabe durch einen Anhänger mit den Merkmalen aus Anspruch 1 gelöst. Vorteilhafte Ausgestaltungen bilden den Gegenstand der Unteransprüche.

Der erfindungsgemäße Anhänger ist vorgesehen und bestimmt für einen Routenzug. Die Routenzüge werden gelegentlich auch als Schleppzüge bezeichnet und bestehen allgemein aus mindestens einem Schlepper und einem oder mehreren geschleppten Anhängern. Der erfindungsgemäße Anhänger besitzt einen vorderen und einen hinteren Anhängerabschnitt, die über einen portalartigen Bogen, unter Bildung eines Aufnahmebereichs für mindestens einen Innenwagen, miteinander verbunden sind. Jeder Anhängerabschnitt besitzt mindestens ein ausreichend großes Rad, das einen zügigen Transport des aufgenommenen Innenwagens gestattet. In der Regel sind die Räder des Innenwagens kleiner als die Räder des Anhängers, so dass bei angehobenem Innenwagen der Anhänger eine schnellere Fahrt erlaubt. Zum Anheben des Innenwagens ist an dem vorderen Anhängerabschnitt und/oder an dem hinteren Anhängerabschnitt eine Hubeinrichtung vorgesehen, über die selbst ein stark beladener Innenwagen angehoben werden kann. Erfindungsgemäß besitzt die Hubeinrichtung drei Hubpositionen, von denen in einer ersten Hubposition der Innenwagen in dem Anhänger für einen Transport angehoben ist. In einer zweiten Hubposition ist der Innenwagen von jeder Seite bis zu einem Anschlag in den Aufnahmebereich einschiebbar. Eine dritte Hubposition erlaubt es, den Innenwagen zu beiden Seiten aus dem Aufnahmebereich herauszuschieben. Durch das Bereitstellen eines Anhängers, der drei Hubpositionen kennt, können die Vorteile eines Portalwagens mit seiner Möglichkeit zum beidseitigen Ein- und Herausschieben des Innenwagens bequem genutzt werden. Zudem ist in der zweiten Hubposition des Anhängers sichergestellt, dass der Innenwagen nur bis zu einem Anschlag in den Aufnahmebereich eingeschoben werden kann und somit in dem Anhänger für ein nachfolgendes Anheben richtig ausgerichtet ist.

Erfindungsgemäß weist der Anhänger mindestens ein Paar von Anschlägen in dem Aufnahmebereich auf. Die Anschläge eines Paares sind dabei seitlich außen liegend in dem Aufnahmebereich angeordnet und bilden für einen in
der zweiten Hubposition des Anhängers eingeschobenen Innenwagen einen Anschlag, der eine Bewegung eines vollständig eingeschobenen Innenwagens begrenzt. Seitlich außen liegend bezieht sich hierbei auf eine Position quer zur Längsrichtung des Anhängers.

Erfindungsgemäß sind die Anschläge schwenkbar in dem Anhängerabschnitt gelagert. Auf diese Weise können die Anschläge verschwenkt werden, um einem vollständig eingeschobenen Innenwagen als Anschlagfläche zu dienen. Bevorzugt besitzt jeder der Anschläge eine Gleitschulter, auf seiner nach außen weisenden Seite, über die der Anschlag von einem in den Aufnahmebereich hinein geschobenen Innenwagen niedergedrückt wird. Ein in den Aufnahmebereich hinein geschobener Innenwagen stößt mit einer vorderen Kante eines Profils gegen die Gleitschulter des Anschlags und wird über diese im niedergedrückten Zustand weiter in den Aufnahmebereich eingeschoben. Der schwenkbar gelagerte Anschlag wird auf diese Weise niedergedrückt und steht dem Innenwagen nicht im Weg.

In einer bevorzugten Ausgestaltung des Anhängers besitzt die erste Hubposition die größte Hubhöhe und die dritte Hubposition die geringste Hubhöhe. Hierbei bedeutet Hubhöhe nicht notwendigerweise ein Anheben der Hubeinrichtung. So kann beispielsweise auch in der dritten Hubposition die Hubeinrichtung abgesenkt werden, während sie in der zweiten und/oder ersten Hubposition angehoben ist. Entscheidend für die Hubhöhe der Hubposition ist die Höhe der Hubeinrichtung über den Untergrund. Hierbei kommt es darauf an, dass in der ersten Hubposition der Innenwagen angehoben ist, also insbesondere seine Räder frei über dem Boden sind. In der zweiten Hubposition kann der Innenwagen in den Aufnahmebereich geschoben werden, allerdings schlägt der Innenwagen in seinem vollständig eingeschobenen Zustand an einem entsprechend in dem Aufnahmebereich positionierten Anschlag an. In der dritten Hubposition ist die Hubeinrichtung so weit abgesenkt, dass der Innenwagen ohne Kontakt mit der Hubeinrichtung oder dem Anschlag durch den Aufnahmebereich hindurchgeschoben werden kann.

In einer bevorzugten Ausgestaltung besitzt von einem Paar von Anschlägen jeder der Anschläge eine Anschlagfläche auf der nach innen in den Aufnahmebereich weisenden Seite. Die nach innen weisende Anschlagfläche bewirkt, dass der in der zweiten Hubposition eingeschobene Innenwagen mit einer vorderen Profilkante an die Anschlagfläche stößt und so die richtige Position des Innenwagens in dem Aufnahmebereich sicherstellt.

Bevorzugt ist jeder der Anschläge in eine vorstehende Position federvorgespannt, so dass ein eingeschobener Innenwagen entweder gegen die Anschlagfläche anschlägt oder über die Gleitschulter den Anschlag niederdrückt.

Bevorzugt ist der Aufnahmebereich seitlich durch Vorsprünge begrenzt, die in der zweiten Hubposition nicht in Anschlag mit dem Innenwagen gelangen und in der ersten Hubposition eine seitliche Bewegung aus dem Aufnahmebereich heraus mindestens auf der Seite des niedergedrückten Anschlags unterbinden. Die seitlich angeordneten Vorsprünge bilden eine weitere seitliche Begrenzung für den Aufnahmebereich und sichern somit den Innenwagen während des Transports zusätzlich, insbesondere auf der Seite des niedergedrückten Anschlags.

In einer bevorzugten Ausgestaltung besitzt in der ersten Hubposition der aufgenommene Innenwagen keinen Bodenkontakt. In der zweiten und der dritten Hubposition ist der Innenwagen selbstverständlich nicht angehoben, da der Innenwagen in den Aufnahmebereich ein- und aus dem Aufnahmebereich herausgeschoben werden kann.

Zur besseren Handhabung des erfindungsgemäßen Anhängers kann bevorzugt ein Bedienelement vorgesehen sein, das eine Anwahl der gewünschten Hubposition gestattet. Die Hubeinrichtung ist elektrisch, hydraulisch oder pneumatisch in ihrer Höhe verstellbar.

Eine bevorzugte Ausgestaltung der Erfindung wird nachfolgend an einem Ausführungsbeispiel näher erläutert. Es zeigen:
- Fig. 1: einen erfindungsgemäßen Anhänger mit eingeschobenem Innenwagen in einer Ansicht von der Seite,
- Fig. 2: eine Detailansicht des eingeschobenen Innenwagens in angehobenem Zustand von der Seite,
- Fig. 3: eine Gesamtansicht des Innenwagens mit eingeschobenem Innenwagen in angehobenem Zustand,
- Fig. 4a u. 4b: Schnittansichten entlang der Linie A-A aus Fig. 3 mit unterschiedlich weit eingeschobenem Innenwagen und
- Fig. 5a und 5b: Detailansichten der an dem Anhänger vorgesehenen Anschläge.

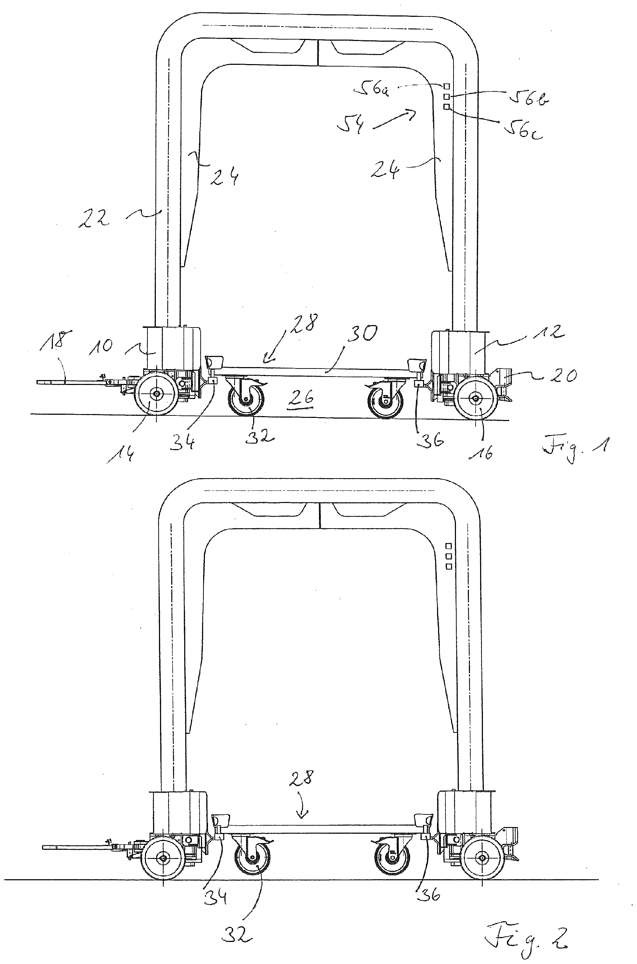

Fig. 1 zeigt einen erfindungsgemäßen Anhänger mit einem vorderen Anhängerabschnitt 10 und einem hinteren Anhängerabschnitt 12. Beide Anhängerabschnitte 10, 12 besitzen ein Paar von Rädern 14, 16. Eine an dem vorderen Anhängerabschnitt 10 vorgesehene Deichsel 18 ist zur Verbindung des Anhängers mit einem schleppenden Fahrzeug vorgesehen. Der hintere Anhängerabschnitt 12 besitzt eine Anhängerkupplung 20, über die ein zu schleppender Anhänger angekuppelt werden kann.

Das vordere Radpaar 14 an dem vorderen Anhängerabschnitt 10 ist lenkbar ausgebildet, wobei der Lenkeinschlag des Radpaares 14 von dem Einschlag der Deichsel 18 abhängig ist. Das Radpaar 16 an dem hinteren Anhängerabschnitt 12 kann entweder als ungelenktes Radpaar ausgebildet sein oder mit einer über den Portalbogen geführten Lenkstange mit der Lenkung der vorderen Räder 14 gekoppelt sein. Der hintere und der vordere Anhängerabschnitt sind über einen portalförmigen Bogen 22 miteinander verbunden. Der Bogen 22 besitzt im Wesentlichen eine U-Form und begrenzt einen Aufnahmebereich 26 zwischen dem vorderen Anhängerabschnitt 10 und dem hinteren Anhängerabschnitt 12. Der Bogen 22 ist in dem dargestellten Ausführungsbeispiel innen liegend zusätzlich mit zwei Versteifungselementen 24 ausgestattet, die die U-Form des Bogenelementes stabilisieren. Da der vordere und hintere Anhängerabschnitt lediglich über den Bogen 22 miteinander verbunden sind, ist es erforderlich, den Bogen 22 mit einer ausreichenden Steifigkeit auszubilden. Insbesondere, wenn mehrere schwer beladene Anhänger geschleppt werden, können entsprechend große Zugkräfte zwischen vorderem und hinterem Anhängerabschnitt wirken.

In dem Aufnahmebereich 26 zwischen dem vorderen und hinteren Anhängerabschnitt befindet sich der Innenwagen 28. In dem dargestellten Ausführungsbeispiel ist der Innenwagen 28 als eine Plattform 30 mit vier Lenkrollen 32 ausgebildet. Grundsätzlich sind auch andere Ausgestaltungen für den Innenwagen 28 möglich. So kann der Innenwagen beispielsweise aus einer mit Rollen versehenen Wanne bestehen oder mit Seitenwänden versehen sein.

Jeder der Anhängerabschnitte 10, 12 ist mit einer Hubeinrichtung (nicht dargestellt) ausgestattet. Die Hubeinrichtung wirkt jeweils auf einen Hubarm 34, 36 der in den Innenbereich 26 vorsteht. Der Hubarm 34 des vorderen Anhängerabschnitts 10 steht auf der von dem Deichselarm 18 fortweisenden Seite des Anhängerabschnitts 10 in den Aufnahmebereich 26 vor. Der Hubarm 36 steht auf der von der Anhängerkupplung 20 fortweisenden Seite des hinteren Anhängerabschnitts 12 in den Aufnahmebereich 26 vor. In Fig. 1 ist die maximal abgesenkte Hubposition der Hubarme 34, 36 dargestellt. In dieser Position ist der Innenwagen 28 mit seiner Plattform 30 frei in den Aufnahmebereich ein- und wieder ausschiebbar. Auf diese Weise kann der Innenwagen zu beiden Seiten des Anhängers aus dem Aufnahmebereich 26 herausgeschoben werden.

Fig. 2 zeigt die angehobene Transportposition des Innenwagens 28, der über die Hubarme 34 und 36 so weit angehoben wurde, dass die Lenkrollen 32 des Innenwagens 28 frei kommen und keinen Bodenkontakt mehr haben. Die in Fig. 2 dargestellte Hubposition der Hubarme 34, 36 und des Innenwagens 28 entsprechen der ersten Hubposition des Innenwagens, in der der Innenwagen 28 für den Transport angehoben ist.

Eine zweite Hubposition, in der die Lenkrollen 32 des Transportwagens 28 noch Bodenkontakt haben, aber die Hubarme 34 und 36 bereits soweit angehoben sind, dass deren Anschläge das Einschieben des Innenwagens 28 begrenzen, entspricht im Wesentlichen der in Fig. 1 dargestellten Position.

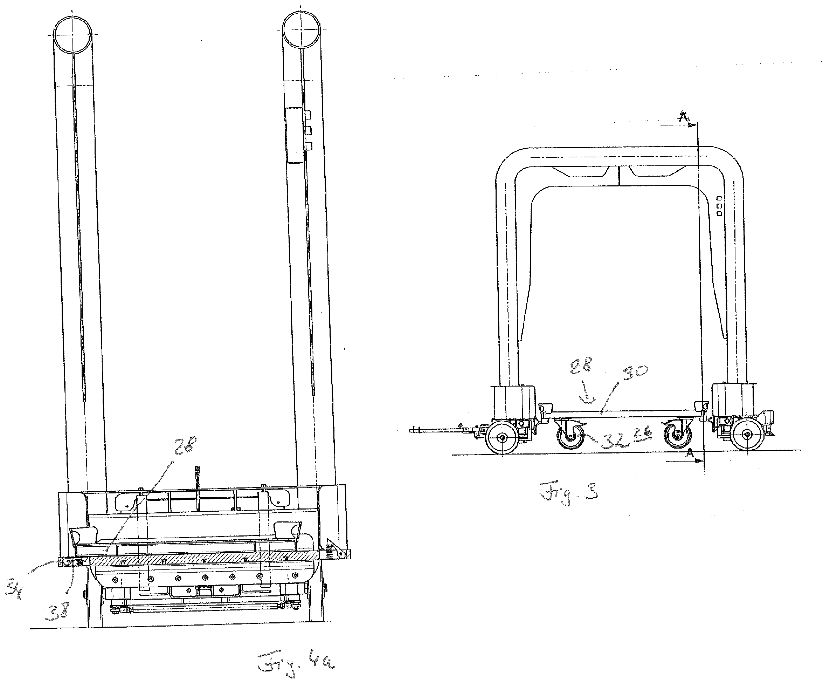

Fig. 3 zeigt in einer Gesamtansicht den Innenwagen 28 in einem angehobenen Zustand, in dem die Lenkrollen 32 keinen Bodenkontakt haben.

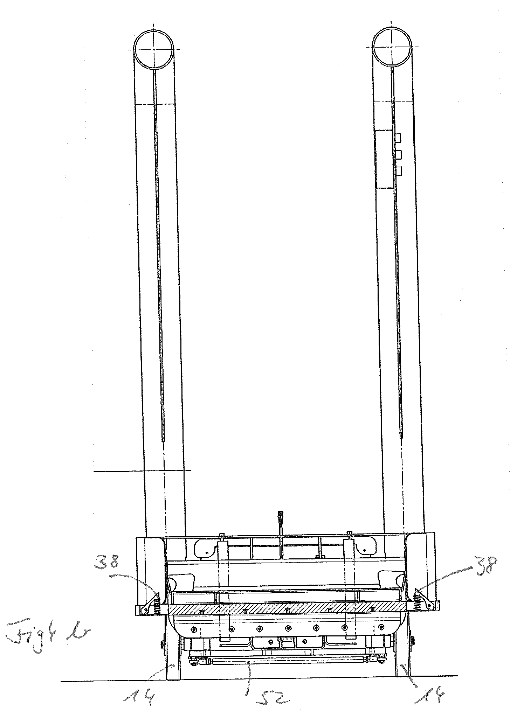

Fign. 4a und 4b zeigen eine Schnittansicht entlang der Linie A-A aus Fig. 3, wobei in Fig. 4a der Innenwagen 28 nur teilweise eingeschoben ist und in Fig. 4b vollständig in den Innenwagenbereich 26 eingeschoben ist.

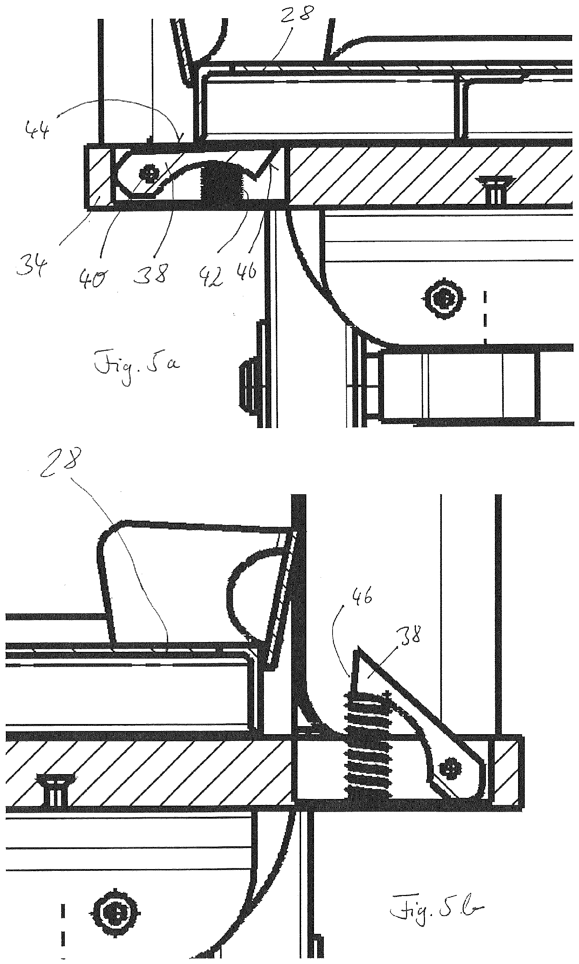

In der Ansicht der Fig. 4a ist ein federvorgespannter Anschlag 38 zu erkennen. Der Anschlag 38 ist in seinem seitlich außen liegenden Ende über eine Schwenkachse 40 schwenkbar an einem der Hubarme 34 oder 36 gelagert. Das freie Ende des Anschlags 38 weist nach innen in den Aufnahmebereich 26 hinein. An seinem freien Ende ist der Anschlag über eine Feder 42 in eine hoch geschwenkte Position vorgespannt, wobei in seiner aufgestellten Position der Anschlag 38 aus dem Hubarm vorsteht. Der Anschlag 38 besitzt eine Gleitschulter 44 und eine Anschlagsfläche 46. In der in Fig. 4a und in Fig. 5a dargestellten Position wird der Anschlag 38 über den eingeschobenen Innenwagen 28 in eine Ausnehmung in dem Hubarm gedrückt und schließt bündig mit diesem ab. Zum Niederdrücken des Anschlags 38 gleitet der Wagen beim Einschieben entlang der Gleitschulter 44.

Im nicht belasteten Zustand steht der Anschlag 38, wie in Fig. 5b gezeigt, aus dem Vorsprung vor, so dass seine Anschlagfläche 46 eine Bewegung des Innenwagens aus dem Aufnahmebereich heraus begrenzt. In der zweiten Hubposition ist gegenüber der dritten Hubposition der Hubarm mit dem Anschlag soweit angehoben, dass der so wie in Fig. 5b dargestellte Anschlag 38 die Einschubbewegung des Innenwagens mit der Anschlagfläche 46 begrenzt. Durch die einander gegenüberliegende Anordnung der Anschläge 38 in einem Paar von Anschlägen kann sichergestellt werden, dass der Innenwagen von beiden Seiten in den Anhänger eingeschoben werden kann. Hinzu kommt, dass in der dritten Hubposition, in der die Hubarme weit genug abgesenkt sind, der Innenwagen auch in beiden Richtungen aus dem Aufnahmebereich herausgeschoben werden kann.

Fig. 4b zeigt eine Ansicht, in der der Innenwagen vollständig in den Anhänger eingeschoben ist. Deutlich zu erkennen ist, dass beide Anschläge 38 vorstehen, um eine Bewegung des Innenwagens in jeweils eine Richtung zu begrenzen.

Zusätzlich können seitlich angeordnete Vorsprünge an dem Hubarm vorgesehen sein. Die Vorsprünge besitzen dabei eine Höhe, die geringer ist als der vorstehende Anschlag. Auf diese Weise kann der Innenwagen bei seinem Einschieben problemlos über den Vorsprung geschoben werden. Ist der Innenwagen dann vollständig eingeschoben, wird dieser durch die Hubarme angehoben, so dass eine Bewegung des Innenwagens zurück durch den Vorsprung blockiert wird. Die Verwendung von zusätzlichen Vorsprüngen ist insbesondere dann wichtig, wenn die Vorsprünge nicht weit genug beabstandet angeordnet werden können, so dass die Situation auftreten kann, dass ein nicht vollständig eingeschobener Innenwagen angehoben wird. In diesem Fall sichern die Vorsprünge den Innenwagen.

In Fig. 4b ist ferner die Lenkstange 52 zu erkennen, über die die Lenkbewegung der beiden Räder 14 gekoppelt ist.

In dem dargestellten Ausführungsbeispiel ist ein Bedienelement 54 auf der Innenseite des Bogens 22 an einem Versteifungselement 24 vorgesehen. Das Bedienelement 54 besitzt drei einzelne Taster 56a, 56b und 56c, über die die Hubpositionen angefahren werden können.

## Patentansprüche

1. Anhänger für einen Routenzug mit einem vorderen und einem hinteren Anhängerabschnitt (10, 12), die über einen portalartigen Bogen (22) unter Bildung eines Aufnahmebereichs (26) für mindestens einen Innenwagen (28) miteinander verbunden sind, wobei eine Hubeinrichtung an dem vorderen Anhängerabschnitt (10) und/oder dem hinteren Anhängerabschnitt (12) vorgesehen ist, wobei
die Hubeinrichtung drei Hubpositionen aufweist, von denen in einer ersten Hubposition der Innenwagen (28) in dem Anhänger für einen Transport angehoben ist, in einer zweiten Hubposition der Innenwagen von jeder Seite in den Aufnahmebereich (26) bis zu einem Anschlag (38) einschiebbar ist und in einer dritten Hubposition zu beiden Seiten aus dem Aufnahmebereich herausschiebbar ist, und mindestens ein Paar von Anschlägen (38) in dem Aufnahmebereich (26) vorgesehen ist, die jeweils seitlich außen liegend einen Anschlag (38) für einen in der zweiten Hubposition eingeschobenen Innenwagen bilden,
**dadurch gekennzeichnet, dass**
von einem Paar von Anschlägen einer als Anschlag für den vollständig eingeschobenen Innenwagen dient, während der zweite Anschlag durch den in den Aufnahmebereich hineingeschobenen Innenwagen niedergedrückt ist.

2. Anhänger nach Anspruch 1, **dadurch gekennzeichnet, dass** die erste Hubposition die größte Hubhöhe und die dritte Hubposition die geringste Hubhöhe besitzen, jeweils bezogen auf die übrigen Hubhöhen.

3. Anhänger nach Anspruch 1 oder 2, **dadurch gekennzeichnet, dass** die Anschläge schwenkbar an dem Anhängerabschnitt gelagert sind.

4. Anhänger nach Anspruch 3, **dadurch gekennzeichnet, dass** jeder der Anschläge eine Gleitschulter (44) auf der nach außen weisenden Seite besitzt, über die der Anschlag von einem in den Aufnahmebereich hinein geschobenen Innenwagen niedergedrückt wird.

5. Anhänger nach Anspruch 3 oder 4, **dadurch gekennzeichnet, dass** jeder der Anschläge eine Anschlagfläche (46) auf der nach innen in den Aufnahmebereich (26) weisenden Seite besitzt.

6. Anhänger nach einem der Ansprüche 3 bis 5, **dadurch gekennzeichnet, dass** jeder der Anschläge in eine vorstehende Position federvorgespannt (42) ist, wobei ein eingeschobener Innenwagen entweder gegen die Anschlagfläche (46) anschlägt oder über die Gleitschulter (44) den Anschlag (38) gegen die Federkraft niederdrückt.

7. Anhänger nach einem der Ansprüche 1 bis 6, **dadurch gekennzeichnet, dass** der Aufnahmebereich (26) seitlich durch Vorsprünge (48, 50) begrenzt ist, die in der zweiten Hubposition nicht in Anschlag mit dem Innenwagen gelangen und in der ersten Hubposition eine seitliche Bewegung aus dem Aufnahmebereich auf der Seite des niedergedrückten Anschlags unterbinden.

8. Anhänger nach einem der Ansprüche 1 bis 7, **dadurch gekennzeichnet, dass** in der ersten Hubposition der aufgenommene Innenwagen keinen Bodenkontakt besitzt.

9. Anhänger nach einem der Ansprüche 1 bis 8, **dadurch gekennzeichnet, dass** ein Bedienelement (54) vorgesehen ist, das eine Auswahl (56a, 56b, 56c) der Hubpositionen gestattet.

10. Anhänger nach einem der Ansprüche 1 bis 9, **dadurch gekennzeichnet, dass** die Hubeinrichtung elektrisch, hydraulisch oder pneumatisch arbeitet.

## Claims

1. A trailer for a tugger train comprising a front and a rear trailer portion (10, 12), which are interconnected via a gantry-like arch (22) so as to form a receiving region (26) for at least one inner cart (28), a lifting apparatus being provided on the front trailer portion (10) and/or the rear trailer portion (12),
the lifting apparatus having three lifting positions, in a first lifting position of which the inner cart (28) is lifted in the trailer for transportation, in a second lifting position of which the inner cart can be pushed from any side into the receiving region (26) up to an end stop (38), and in a third lifting position of which said inner cart can be pushed out of the receiving region from both sides, and at least one pair of end stops (38) being provided in the receiving region (26), which end stops each form a lateral outer end stop (38) for an inner cart pushed into the second lifting position,
**characterized in that**
one of a pair of end stops serves as an end stop for the fully pushed-in inner cart, whereas the second end stop is pressed down by the inner cart pushed into the receiving region.

2. The trailer according to claim 1, **characterized in that** the first lifting position is at the greatest lifting height and the third lifting position is at the lowest lifting height, in each case relative to the other lifting heights.

3. The trailer according to claim 1 or 2, **characterized in that** the end stops are mounted on the trailer portion so as to be pivotable.

4. The trailer according to claim 3, **characterized in that** each of the end stops comprises a slide shoulder (44) on the side facing outwards, by means of which the end stop is pressed down by an inner cart pushed into the receiving region.

5. The trailer according to claim 3 or 4, **characterized in that** each of the end stops comprises an end-stop surface (46) on the side facing inwards into the receiving region (26).

6. The trailer according to any one of claims 3 to 5, **characterized in that** each of the end stops is spring-preloaded in a protruding position (42), a pushed-in inner cart either striking the end-stop surface (46) or pressing the end stop (38) down against the spring force by means of the slide shoulder (44).

7. The trailer according to any one of claims 1 to 6, **characterized in that** the receiving region (26) is laterally delimited by projections (48, 50) which do not come into contact with the inner cart in the second lifting position and which prevent a sideways movement out of the receiving region on the side of the pressed-down end stop in the first lifting position.

8. The trailer according to any one of claims 1 to 7, **characterized in that**, in the first lifting position, the received inner cart makes no contact with the ground.

9. The trailer according to any one of claims 1 to 8, **characterized in that** a control element (54) is provided which allows for selection (56a, 56b, 56c) of the lifting positions.

10. The trailer according to any one of claims 1 to 9, **characterized in that** the lifting apparatus operates electrically, hydraulically or pneumatically.

## Revendications

1. Remorque de chariot tracteur dotée d'un train de remorque avant et d'un train de remorque arrière (10, 12), qui sont reliés l'un à l'autre au moyen d'un arceau semblable à un portique (22) en formant un espace de réception (26) pour au moins un chariot intérieur (28), dans laquelle un dispositif de levage est prévu sur le train de remorque avant (10) et/ou sur le train de remorque arrière (12), dans laquelle
le dispositif de levage présente trois positions de levage, à partir desquelles le chariot intérieur (28) dans la remorque est soulevé en vue d'un transport dans une première position de levage, le chariot intérieur peut être intercalé de chaque côté à l'intérieur de l'espace de réception (26) jusqu'à une butée (38) dans une deuxième position de levage et être extrait des deux côtés de l'espace de réception dans une troisième position de levage, et au moins une paire de butées (38) est prévue dans l'espace de réception (26), qui forment respectivement une butée (38) située latéralement à l'extérieur pour un chariot intérieur intercalé dans la deuxième position de levage
**caractérisée en ce que**
parmi une paire de butées l'une sert de butée au chariot intérieur complètement intercalé, pendant que la seconde butée est enfoncée par le chariot intérieur introduit dans l'espace de réception.

2. Remorque selon la revendication 1, **caractérisée en ce que** la première position de levage et la troisième position de levage possèdent respectivement la plus grande hauteur de levage et la plus faible hauteur de levage par rapport aux autres hauteurs de levage.

3. Remorque selon la revendication 1 ou 2, **caractérisée en ce que** les butées sont montées sur le train de remorque de manière à pouvoir pivoter.

4. Remorque selon la revendication 3, **caractérisée en ce que** chacune des butées possède un épaulement de glissement (44) sur la face tournée vers l'extérieur, à l'aide duquel la butée est enfoncée par un chariot intérieur introduit dans l'espace de réception.

5. Remorque selon la revendication 3 ou 4, **caractérisée en ce que** chacune des butées possède une surface de butée (46) sur la face tournée vers l'intérieur dans l'espace de réception (26).

6. Remorque selon l'une des revendications 3 à 5, **caractérisée en ce que** chacune des butées est sollicitée par un ressort (42) dans une position saillante, dans laquelle un chariot intérieur intercalé s'appuie contre la surface de butée (46) ou enfonce la butée (38) contre la force du ressort au moyen de l'épaulement de glissement (44).

7. Remorque selon l'une des revendications 1 à 6, **caractérisée en ce que** l'espace de réception (26) est limité latéralement par des bossages (48, 50), qui ne viennent pas en butée avec le chariot intérieur dans la deuxième position de levage et empêchent un déplacement latéral hors de l'espace de réception du côté de la butée enfoncée dans la première position de levage.

8. Remorque selon l'une des revendications 1 à 7, **caractérisée en ce que** le chariot intérieur embarqué ne possède aucun contact avec le sol dans la première position de levage.

9. Remorque selon l'une des revendications 1 à 8, **caractérisée en ce qu'**un élément de commande (54) est prévu et permet de sélectionner les positions de levage (56a, 56b, 56c).

10. Remorque selon l'une des revendications 1 à 9, **caractérisée en ce que** le dispositif de levage fonctionne selon un mode électrique, hydraulique ou pneumatique.
